# EUROPÄISCHE PATENTSCHRIFT

(11) **EP 2 693 584 B1**
(45) Veröffentlichungstag und Bekanntmachung des Hinweises auf die Patenterteilung: **22.11.2017**
(21) Anmeldenummer: 12305959.4
(22) Anmeldetag: 03.08.2012
(51) Int. Cl.: H02G 15/34, H01B 12/14

(54) **Anordnung mit mindestens einem supraleitfähigen Kabel**
Assembly with at least one superconducting cable
Agencement doté d'au moins un câble supraconducteur

(43) Veröffentlichungstag der Anmeldung: 05.02.2014
(73) Patentinhaber: Nexans, 92400 Courbevoie (FR)
(72) Erfinder: Stemmle, Mark, Dr., 30625 Hannover (DE); Schippl, Klaus, 30659 Hannover (DE); Di Palma, Michele, 31832 Springe (DE); Lange, Stephan, 30900 Wedemark (DE)
(74) Vertreter: Döring, Roger

(56) Entgegenhaltungen:
- EP-A1- 0 807 938
- EP-A1- 1 837 925
- DE-A1- 1 933 883
- US-A1- 2006 211 579
- US-A1- 2010 199 689
- US-A1- 2010 285 968
- HAMABE M ET AL: "Cooling cycle test of DC superconducting power transmission cable", JOURNAL OF PHYSICS: CONFERENCE SERIES, INSTITUTE OF PHYSICS PUBLISHING, BRISTOL, GB, Bd. 234, Nr. 3, 22. Juli 2010 (2010-07-22) , Seite 32019, XP020193591, ISSN: 1742-6596, DOI: 10.1088/1742-6596/234/3/032019

## Beschreibung

Die Erfindung bezieht sich auf eine Anordnung mit mindestens einem supraleitfähigen Kabel gemäß dem Oberbegriff des Patentanspruchs 1.

Eine solche Anordnung geht aus der EP 1 617 537 B1 hervor.

Feststehende Teile der Übertragungsstrecke können Endenabschlüsse oder Verbindungsmuffen sein, durch welche zwei aus Kryostat und Kabel bestehende Längen miteinander verbunden werden.

Ein supraleitfähiges Kabel hat elektrische Leiter aus einem Material, das bei ausreichend tiefen Temperaturen in den supraleitfähigen Zustand übergeht. Der elektrische Gleichstromwiderstand eines entsprechend aufgebauten Leiters ist bei ausreichender Kühlung Null, solange eine bestimmte Stromstärke, die kritische Stromstärke, nicht überschritten wird. Geeignete supraleitfähige Materialien sind beispielsweise oxidische Materialien auf Basis seltener Erden (ReBCO), insbesondere YBCO (Yttrium-Barium-Kupfer-Oxid), oder BSCCO (Wismut-Strontium-Kalzium-Kupfer-Oxid). Ausreichend niedrige Temperaturen, um ein derartiges Material in den supraleitfähigen Zustand zu bringen, liegen beispielsweise zwischen 67 K und 110 K. Es gibt aber auch supraleitfähige Materialien, wie beispielsweise Magnesiumdiborid, die auf noch tiefere Temperaturen abgekühlt werden müssen, wenn sie in den supraleitfähigen Zustand übergehen sollen. Geeignete Kühlmittel für all diese Materialien sind beispielsweise Stickstoff, Helium, Neon und Wasserstoff oder Gemische dieser Stoffe.

Beim Betrieb einer Anordnung mit mindestens einem supraleitfähigen Kabel wird dasselbe also innerhalb des Kryostats erheblich abgekühlt, wodurch es infolge thermischer Kontraktion kürzer wird. Um die Funktionsfähigkeit der Übertragungsstrecke zu gewährleisten, müssen Vorkehrungen getroffen werden, durch welche die Verkürzung des Kabels ausgeglichen werden kann.

Das Journal of Physics, Bd. 234, Nr. 3, 22.7.2010, Seiten 1 bis 6, beschreibt eine Teststrecke von 20 m Länge, mit welcher Zyklen einer Abkühlung eines supraleitfähigen Gleichstrom-Übertragungskabels getestet werden sollen. Das Kabel ist in einem Kryorohr angeordnet, das an zwei Kryostate angeschlossen ist. An den Enden des Kryorohrs ist in der Nähe der Kryostate jeweils ein Faltenbalg angebracht, durch welchen temperaturbedingte Längenänderungen des Kryorohrs ausgeglichen werden können.

Aus der US 2010/0285968 A1 geht ein Verfahren zur Kompensation einer thermischen Verkürzung von supraleitfähigen Kabeln hervor. Dazu wird zunächst eine zu kompensierende Kabellänge berechnet. Ein Kabel entsprechender Länge wird dann mit Gewalt in ein Rohr hineingeschoben, in welchem es danach beispielsweise wellenförmig bzw. wendelförmig verläuft. Das Kabel wird dann im Rohr so festgelegt, dass es nicht mehr aus demselben herausgeschoben werden kann.

In der EP 0 807938 A1 ist eine aus vier radial voneinander getrennten Rohren bestehende Hülle für elektrische supraleitfähige Leiter angegeben. Die Rohre weisen abwechselnd geradlinige Abschnitte mit hoher mechanischer Stabilität und quer gewellte Abschnitte auf, durch welche die an sich steife Hülle biegbar wird.

Gemäß der US 2006/0211579 A1 werden geradlinig verlaufende Abschnitte eines als Rohr ausgeführten supraleitfähigen Kabels durch Faltenbälge miteinander verbunden. Es sollen damit die Auswirkungen von Erdbeben abgefangen sowie Bodenunebenheiten ausgeglichen werden.

Bei der Anordnung nach der EP 1 720 176 B1 ist ein supraleitfähiges Kabel in einem Kryostat so angebracht, daß es bei Raumtemperatur in Form einer Welle oder Wendel verläuft. Die dadurch gegenüber dem Kryostat erzielte Überlänge des Kabels ist durch ein kreuzartiges Netzwerk stabilisiert, das punktweise mit dem Kabel verbunden ist.

Aus der eingangs erwähnten EP 1 617 537 B1 geht eine Anordnung mit einem in einem Kryostat verlegten supraleitfähigen Kabel hervor, das mit einem Endenabschluß verbunden ist. Ein elektrischer Leiter des Endenabschlusses ist mit einem rohrförmigen, radial federnde Lamellen aufweisenden Bauteil aus elektrisch leitendem Werkstoff bestückt, in welches der Leiter des supraleitfähigen Kabels im Montagezustand hineinragt. Im Falle von thermisch bedingten Längenänderungen kann der Leiter des supraleitfähigen Kabels in seiner Längsrichtung in dem rohrförmigen Bauteil gleiten.

Der Erfindung liegt die Aufgabe zugrunde, den Aufbau der eingangs geschilderten Anordnung zu vereinfachen.

Diese Aufgabe wird entsprechend den kennzeichnenden Merkmalen des Patentanspruchs 1 gelöst. Bei dieser Anordnung kann das supraleitfähige Kabel ohne jede Sonderbehandlung beispielsweise zwischen zwei Endenabschlüssen verlegt und in üblicher Technik elektrisch leitend an dieselben angeschlossen werden. Der dann ebenfalls fest mit den Endenabschlüssen verbundene Kryostat ist an seinen an die Endenabschlüsse angeschlossenen Enden durch die jeweils zwei Faltenbälge elastisch so verformbar, daß er einer durch Abkühlung bedingten Verkürzung des Kabels auf einfache Weise folgen kann. Die durch das gebogene Rohrstück, durch welches das Kabel geführt ist, verbundenen Faltenbälge werden durch das kürzer werdende Kabel lediglich zusammengedrückt und dadurch selbst kürzer. Die beiden Faltenbälge werden dabei durch das gebogene Rohrstück gleichmäßig mechanisch belastet und gleichmäßig zusammengedrückt. Die übrige Länge des Kryostats bleibt von der Verkürzung des Kabels unbeeinflußt.
Das Rohrstück kann flexibel, aber auch glatt und damit starr ausgeführt sein. Ausführungsbeispiele des Erfindungsgegenstandes sind in den Zeichnungen dargestellt.
Es zeigen:
Fig. 1 in schematischer Darstellung eine Anordnung nach der Erfindung.
Fig. 2 einen Schnitt durch Fig. 1 längs der Linie II - II in vergrößerter Darstellung.
Fig. 3 eine Einzelheit der Anordnung nach Fig. 1.
Fig. 4 eine gegenüber Fig. 3 andere Anwendung der Anordnung.

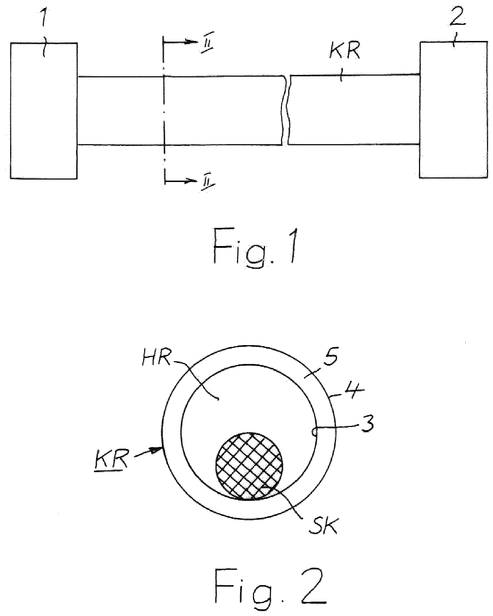

In Fig. 1 sind als feststehende Teile einer Übertragungsstrecke für elektrische Energie zwei Endenabschlüsse 1 und 2 schematisch dargestellt. Derartige Endenabschlüsse sind bekannt, so daß auf ihren Aufbau nicht genauer eingegangen wird. An die beiden Endenabschlüsse 1 und 2 sind ein Kryostat KR und ein in demselben befindliches supraleitfähiges Kabel SK (Fig. 2) fest angeschlossen.
Der Kryostat KR soll mindestens ein thermisch isoliertes Rohr aus Metall oder Kunststoff zur Aufnahme des Kabels SK und zum Durchleiten eines Kühlmittels haben. Er besteht in der Ausführungsform nach Fig. 2 aus zwei koaxial und mit Abstand zueinander angeordneten Rohren 3 und 4 aus Metall, vorzugsweise aus Edelstahl, zwischen denen eine Abstandshalterung und eine thermische Isolierung 5, vorzugsweise eine Vakuumisolierung, angeordnet sind. Die Rohre 3 und 4 können quer zu ihrer Längsrichtung gewellt und damit gut biegbar sein. Der Kryostat KR umschließt neben dem Kabel SK einen Hohlraum KR, durch welchen ein Kühlmittel geleitet werden kann. Der Aufbau des supraleitfähigen Kabels SK ist beliebig. Es können auch zwei oder mehr supraleitfähige Kabel in dem Kryostat KR untergebracht sein.

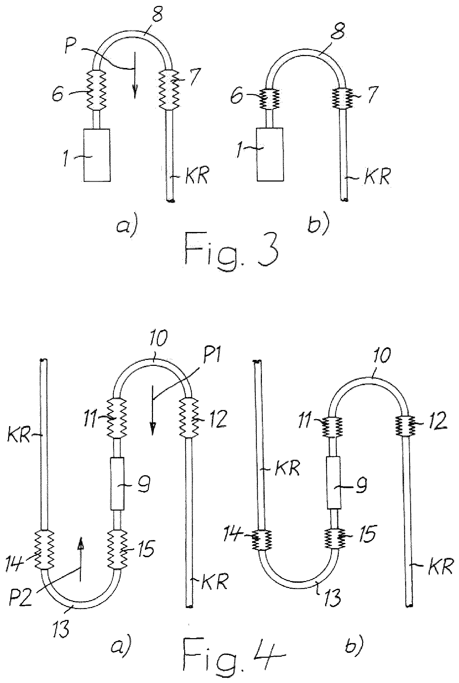

In Fig. 3 ist die Anordnung nach der Erfindung in Verbindung mit dem Endenabschluß 1 dargestellt. Der entsprechende Aufbau gilt in gleicher Weise auch für den Endenabschluß 2. Der Kryostat KR ist ebenso wie das von ihm umschlossene Kabel SK fest mit dem Endenabschluß 1 verbunden. Am anderen, hier frei gelassenen Ende sind der Kryostat KR und das von ihm umschlossene Kabel SK fest an ein anderes feststehendes Teil der Übertragungsstrecke für elektrische Energie angeschlossen. Der Kryostat KR hat an seinem Ende zwei Faltenbälge 6 und 7, die mit Abstand zueinander im Kryostat KR angebracht sind. Sie sind durch ein gebogenes, zum Kryostat KR gehörendes Rohrstück 8 miteinander verbunden. Die Faltenbälge 6 und 7 liegen symmetrisch zum Rohrstück 8, so wie es in Fig. 3 dargestellt ist. Wenn der Kryostat KR entsprechend Fig. 2 aus zwei koaxialen Rohren besteht, dann ist in jedem der beiden Rohre ein Faltenbalg angebracht.
Das Rohrstück 8 ist mit Vorteil ebenso aufgebaut wie der Kryostat KR. Es kann also aus einem Abschnitt nur eines thermisch isolierten Rohres bestehen oder aus einem Abschnitt eines Doppelrohrs, das aus zwei konzentrisch und mit Abstand zueinander angeordneten Rohren besteht, zwischen denen eine thermische Isolierung angebracht ist. Das Rohr bzw. die Rohre des Rohrstücks 8 kann bzw. können glatt und damit starr aber auch gewellt und damit flexibel ausgeführt sein. Das Rohrstück 8 ist mit Vorteil um 180° gebogen, zumindest aber etwa um 180°, so daß sich eine symmetrische Anordnung der mit dem Rohrstück 8 verbundenen Faltenbälge 6 und 7 ergibt, so wie es in bevorzugter Ausführungsform in Fig. 3 dargestellt ist.
In Fig. 3a ist die Anordnung nach der Erfindung bei Raumtemperatur dargestellt. Die Faltenbälge 6 und 7 haben dann vorzugsweise ihre volle Länge. Wenn die Anordnung in Betrieb genommen wird, wird ein Kühlmittel durch den Kryostat KR geleitet, durch welches das Kabel SK abgekühlt und dadurch kürzer wird. Es legt sich dabei an die Wandung des Rohrstücks 8 an und zieht dasselbe in Richtung des Pfeiles P. Dadurch werden die Faltenbälge 6 und 7 zusammengedrückt, und zwar bei der bevorzugten symmetrischen Ausführungsform nach Fig. 3 gleichmäßig. Die entsprechende verkürzte Endstellung der Faltenbälge 6 und 7 geht aus Fig. 3b hervor.

In Fig. 4 ist als feststehendes Teil der Übertragungsstrecke für elektrische Energie eine Verbindungsmuffe 9 eingezeichnet, an welche auf beiden Seiten der Kryostat KR und das von demselben umschlossene Kabel SK fest angeschlossen sind. In der dargestellten Ausführungsform sind auf beiden Seiten der Verbindungsmuffe 9 Faltenbälge in den Kryostat KR eingebaut. Es sind die durch ein Rohrstück 10 miteinander verbundenen Faltenbälge 11 und 12 einerseits sowie die durch ein Rohrstück 13 miteinander verbundenen Faltenbälge 14 und 15 andererseits. Die offen gelassenen Enden des Kryostats KR sind auch hier mit anderen feststehenden Teilen der Übertragungsstrecke fest verbunden, beispielsweise mit Endenabschlüssen.

Die Anordnung ist in Fig. 4a analog zu Fig. 3a bei Raumtemperatur dargestellt. Bei Abkühlung des Kabels SK läuft der gleiche Vorgang ab, wie er für Fig. 3 beschrieben ist. Das Rohrstück 10 wird in Richtung des Pfeiles P1 gezogen, wodurch die Faltenbälge 11 und 12 verkürzt werden, während das Rohrstück 13 in Richtung des Pfeiles P2 gezogen wird, wodurch die Faltenbälge 14 und 15 verkürzt werden. Die verkürzten Endpositionen der Faltenbälge 11 und 12 sowie 14 und 15 gehen aus Fig. 4b hervor.

In den Fig. 3 und 4 sind die unterschiedlichen Faltenbälge in einer Ebene nebeneinander dargestellt. Sie können gegebenenfalls auch übereinander angeordnet werden. Wenn die Kühlung des Kabels SK abgebrochen bzw. unterbrochen wird, dehnt sich dasselbe wieder aus. Die unterschiedlichen Faltenbälge werden dann aus eigener Kraft wieder länger.

## Patentansprüche

1. Anordnung mit mindestens einem supraleitfähigen Kabel (SK) und einem dasselbe umgebenden Kryostat (KR), der mindestens ein thermisch isoliertes Rohr aufweist, welcher das supraleitfähige Kabel (SK) und einen Hohlraum (HR) zum Durchleiten eines Kühlmittels umschließt, bei welcher der Kryostat (KR) mit seinen beiden Enden ebenso wie das in demselben befindliche supraleitfähige Kabel (SK) mit seinen beiden Enden im Montagezustand fest mit feststehenden Teilen einer Übertragungsstrecke verbunden sind, **dadurch gekennzeichnet,**
- **dass** an jedem der zum Anschluß an die feststehenden Teile (1,2) der Übertragungsstrecke ausgeführten Enden des Kryostats (KR) mit Abstand zueinander zwei Faltenbälge (6,7) in denselben eingebaut sind und
- **dass** zwischen den beiden Faltenbälgen (6,7) jedes der beiden Enden des Kryostats (KR) ein zu demselben gehörendes, thermisch isoliertes und gebogen verlaufendes Rohrstück (8) angebracht ist, das um 180° bzw. etwa 180° gebogen ist, so dass sich eine symmetrische Anordnung der mit dem Rohrstück (8) verbundenen Faltenbälge (6,7) ergibt.

2. Anordnung nach Anspruch 1, **dadurch gekennzeichnet, daß** das Rohrstück (8) als Abschnitt mindestens eines glatten Rohres ausgeführt ist.

3. Anordnung nach Anspruch 1, **dadurch gekennzeichnet, daß** das Rohrstück (8) als Abschnitt mindestens eines flexiblen Rohres ausgeführt ist.

## Claims

1. Arrangement with at least one superconductive cable (SK) and a cryostat (KR) surrounding the the same, which has at least one thermally insulated pipe which encloses the superconductive cable (SK) and a hollow space (HR) for conducting a cooling agent therethrough, wherein the cryostat (KR), in the same manner as the superconductive cable located in the same, is connected with its two ends to stationary parts of a transmission path, **characterized in**
- **that** at each of the ends of the cryostat (KR) which is provided for the connection to the stationary parts (1,2) of the transmission path, two bellows (6,7) are mounted at a distance from each other in the cryostat (KR), and
- **that** between the two bellows (6,7) of each of the two ends of the cryostat (KR), a thermally insulated and curved pipe piece (8) belonging to the cryostat (KR) is mounted, which is bent about an angle of 180° or nearly 180° such, that a symmetrical arrangement of the bellows (6,7) is achieved which are connected to each other by the pipe piece (8).

2. Arrangement according to claim 1, **characterized in that** the pipe piece (8) is a part of at least one smooth pipe.

3. Arrangement according to claim 1, **characterized in that** the pipe piece (8) is a part of at least one flexible pipe.

## Revendications

1. Arrangement comprenant au moins un câble supraconducteur (SK) et un cryostat (KR) qui entoure celui-ci, lequel possède au moins un tube isolé thermiquement qui enveloppe le câble supraconducteur (SK) ainsi qu'un espace creux (HR) destiné à être traversé par un agent réfrigérant, avec lequel les deux extrémités du cryostat (KR), tout comme les deux extrémités du câble supraconducteur (SK) qui se trouve dans celui-ci, en situation de montage, sont reliées à demeure à des parties fixes d'un segment de transmission, **caractérisé en ce**
- **qu'**au niveau de chacune des extrémités du cryostat (KR) exécutées pour le raccordement aux parties fixes (1, 2) du segment de transmission sont intégrés dans celle-ci deux soufflets (6, 7) espacés l'un de l'autre et
- **qu'**entre les deux soufflets (6, 7) de chacune des deux extrémités du cryostat (KR) est montée une pièce tubulaire (8) faisant partie de ceux-ci, isolée thermiquement et au tracé courbe, laquelle est courbée de 180° ou d'environ 180°, ce qui permet d'obtenir un arrangement symétrique des soufflets (6, 7) reliés par la pièce tubulaire (8).

2. Arrangement selon la revendication 1, **caractérisé en ce que** la pièce tubulaire (8) est réalisée sous la forme d'une portion d'au moins un tube lisse.

3. Arrangement selon la revendication 1, **caractérisé en ce que** la pièce tubulaire (8) est réalisée sous la forme d'une portion d'au moins un tube flexible.
